# EUROPÄISCHE PATENTSCHRIFT

(11) **EP 4 038 305 B1**
(45) Veröffentlichungstag und Bekanntmachung des Hinweises auf die Patenterteilung: **07.05.2025**
(21) Anmeldenummer: 20789446.0
(22) Anmeldetag: 01.10.2020
(51) Int. Cl.: F16L 55/179

(54) **VORRICHTUNG ZUM SANIEREN VON SCHADHAFTEN LEITUNGSWANDUNGEN**
DEVICE FOR REPAIRING DAMAGED PIPE WALLS
DISPOSITIF POUR RÉPARER DES PAROIS DE TUYAU ENDOMMAGÉES

(30) Priorität: 01.10.2019 DE 102019006864
(43) Veröffentlichungstag der Anmeldung: 10.08.2022
(73) Patentinhaber: Pipetronics GmbH & Co. KG, 76865 Rohrbach (DE)
(72) Erfinder: NOLL, Christian, 67117 Limburgerhof (DE)
(74) Vertreter: Dr. Langfinger & Partner
(86) Internationale Anmeldenummer: PCT/DE2020/100845
(87) Internationale Veröffentlichungsnummer: WO 2021/063449

(56) Entgegenhaltungen:
- DE-A1- 102017 109 980
- DE-A1- 19 538 813
- DE-U1- 29 621 297

## Beschreibung

Die vorliegende Erfindung betrifft eine Vorrichtung zum Sanieren von schadhaften Leitungswandungen im Bereich des Anschlusses einer Nebenleitung an eine Hauptleitung.

Es sind Vorrichtungen für eine solche Sanierung im Stand der Technik bekannt, bei denen ein selbstfahrender oder mit Seilen im Kanal verfahrbarer Kanalsanierungsroboter eine Tragvorrichtung für verschiedene Sanierungswerkzeuge umfasst. Diese Werkzeuge, insbesondere eine Spachteleinrichtung, lassen sich nach Positionierung des Roboters im Schadstellenbereich von außerhalb des Kanals aus steuern.

Für die Reparatur von Schadstellen im Bereich des Anschlusses einer Nebenleitung an eine Hauptleitung sind zudem Vorrichtungen im Stand der Technik beschrieben, bei denen der im Hauptkanal anordnenbare Kanalsanierungsroboter eine Tragvorrichtung für eine im Bereich des Nebenkanalanschlusses an die Wandung des Hauptleitung anlegbare Abdeckung bildet.

Die Abdeckung trägt ihrerseits einen in die Nebenleitung einbringbaren, aufweitbaren Dehnkörper, auch Blase genannt. Im aufgeweiteten Zustand liegt dieser Dehnkörper gegen die Wandung der Nebenleitung an und bildet dann zusammen mit der Abdeckung eine Schalung aus, die eine in diese Schalung eingebrachte viskose Dichtmasse vor einem Aushärten derselben stützt. Nach dem Aushärten wird der Dehnkörper kontrahiert und die Abdeckung entfernt und die Dichtmasse bildet die wiederhergestellten, vorher schadhaften Kanalwandungsbereiche. Ein solche Abdeckung gemäß dem Stand der Technik, auch als Schalungsmanschette bezeichnet, ist in einer Ausführungsform grundsätzlich aus WO 1995027167A1 vorbekannt.

Grundsätzlich besteht die Möglichkeit die von den Vorrichtungen der beschriebenen Art verwendete viskose aushärtbare Dichtmasse vom Kanaläußeren aus über Schläuche oder andere bewegliche Leitungen dem Kanalsanierungsgerät zuzuführen.

Diese Lösung ist aber nicht nur aufwendig, sondern auch in vielerlei Hinsicht nachteilig. Das Nachziehen von Leitungen schränkt die Manövrierfähigkeit der Vorrichtung im Kanal erheblich ein, insbesondere da oftmals mehrere schadhafte und zu sanierende Stellen in einem Kanal auftreten und die Schadstellen auch mehr als 100 Meter vom Einbringort des Kanalsanierungsroboters entfernt liegen können. Daher müssen die Zuführleitungen für die Spachtel- oder Dichtmasse sehr lang sein.

Die zähe Sanierungsmasse durch derart lange Leitungen zu drücken bereitet erhebliche Probleme. Zähe, insbesondere tixotrope Medien bewirken einen geschwindigkeitsabhängigen Druckverlust bei jeder Bewegung in der Leitung. Die Zahlenwerte für Viskosität und Schubspannung in der Sanierungsmasse variieren stark mit der Leitungsgeometrie, der Temperatur und dem genauen Zustand der oft körnigen Anteile enthaltenden Sanierungsmasse.

Gerade bei den mit Schalungen arbeitenden Vorrichtungen ist die Einhaltung bestimmter Druckbereiche beim Verpressen der Sanierungsmasse besonders wichtig. Der Druck muss grundsätzlich mindestens so hoch sein, dass gewährleistet ist, dass die Sanierungsmasse alle schadhaften Kanalwandungsbereiche vollständig ausfüllt. Der Druck darf aber nicht so hoch sein, dass er die schadhaften und brüchigen Kanalwandbereiche zu hoch belastet.

Da der Bediener meist dutzende von Metern entfernt sitzt, ist dieser in der Regel damit überfordert, den Förderdruck für die Sanierungsmasse so einzustellen, dass diese Masse mit dem erforderlichen Druck im Bereich der Spachteleinrichtung bzw. der mit einer Abdeckung und einem Dehnkörper gebildeten Schalung ankommt.

Aus dem Stand der Technik sind daher Lösungen bekannt, um auf eine Verwendung von Leitungen zum Zuführen der Sanierungsmassen zu verzichten.

Aus DE 36 18 963 ist eine mit Abdeckung und Dehnkörper ausgestattete Kanalsanierungsvorrichtung bekannt, bei der die Sanierungsmasse um den zunächst schlaffen Dehnkörper herum angeordnet und dann zusammen mit diesem in den Nebenkanal eingefahren wird. Beim Aufweiten des Dehnkörpers drückt dieser die Sanierungsmasse radial gegen die schadhafte Kanalwand.

Dies bietet den Nachteil, dass nur Sanierungsmassen mit einer hohen Topfzeit verwendet werden können. Unter einer Topfzeit versteht man die Verarbeitbarkeitsdauer von reaktiven Materialien Es ist also die Zeit zwischen dem Anmischen einer mehrkomponentigen Substanz und dem Ende ihrer Verarbeitbarkeit, also die Zeitspanne, in der sich die Substanz noch aus dem Topf nehmen und verarbeiten lässt.

Da als Sanierungsmasse üblicherweise Zweikomponentenkleber verwendet werden, muss somit bei einer Lösung gemäß DE 36 18 963 die Zeit bis zum Aushärten mit vielen Sicherheiten festgelegt werden, damit sichergestellt ist, dass die Schalung vor Ende der Topfzeit gesetzt ist.

Daher ist im Stand der Technik alternativ bekannt geworden, die Sanierungsmasse in Kartuschen, Zylinder und mittels Pumpen entleerbaren Aufbewahrungsbehältern direkt auf dem Sanierungsroboter anzuordnen.

Problematisch hierbei ist jedoch, dass dies die notwendige Topfzeit verlängert. Beim Einsatz von Aufbewahrungsbehältern beginnt die Aushärtung der Sanierungsmasse spätestens mit dem Befüllen der derselben und somit bereits vor dem Einbringen des Sanierungsroboters in die zu sanierende Leitung.

Dabei ist zu beachten, dass das Anbringen der Schalung mehrere Arbeitsschritte umfasst. Zunächst wird das Abdeckelement in der Hauptleitung expandiert, dann der Dehnkörper durch eine Aussparung in die Nebenleitung eingeführt und ebenfalls expandiert, indem ein kleines nadelförmiges Verbindungselement in das Ventil des Dehnkörpers eingeführt werden muss. Anschließend muss ein Verschluss in der Abdeckung geöffnet werden, und dort der Auslass einer Leitung zum Transport der Sanierungsmasse in den Zwischenraum zwischen der durch die Abdeckung und den Dehnkörper gebildeten Schalung und die Bestandswände gepresst werden.

Jeder dieser Arbeitsschritte ist potentiell fehleranfällig und muss ggf. mehrfach wiederholt werden, so dass die Topfzeit mit hohen Sicherheiten für solche Bedienfehler ausgelegt werden muss. Dementsprechend lang ist die Aushärtezeit der Sanierungsmasse bis die Schalung wieder entfernt werden kann.

Es ist jedoch wünschenswert, den Zeitraum, in dem die Schalung in der Leitung verbleiben muss, zu minimieren. Dies reduziert Arbeitskosten sowie die Kosten für das Bereithalten des Kanalsanierungsroboters.

Nachteilig an den bekannten Vorrichtungen ist es dabei somit, dass zwar durch den Verzicht auf externe Zuführungsleitungen der Sanierungsmasse die Probleme der richtigen Druckbeaufschlagung minimiert werden können, jedoch eine lange Aushärtezeit notwendig ist, da die mitgeführte Sanierungsmasse eine ausreichend dimensionierte Topfzeit aufweisen muss.

Dieses Problem wird in DE 10 2017 109980 A1 etwa durch eine beheizbare Schalung oder in DE 296 21 297 U1 durch eine mit insbesondere Warmwasser beheizbare Schalung gelöst. Jedoch stellten sich nicht die gewünschten verkürzten Aushärtzeiten ein oder es war eine zusätzliche Warmwasser zuführung notwendig.

Daher lag die Aufgabe der vorliegenden Erfindung darin, die Nachteile des Standes der Technik zu überwinden und insbesondere eine Vorrichtung zu liefern, die eine schnellere und zuverlässigere Sanierung von Leitungen ermöglicht, wobei eine möglichst schnelle Aushärtung der Sanierungsmasse ermöglicht wird.

Diese Aufgabe wird gelöst durch eine Vorrichtung nach Anspruch 1 zum Sanieren von schadhaften Leitungswandungen im Bereich des Anschlusses einer Nebenleitung an eine Hauptleitung, umfassend ein fahrbares Trägerelement, wobei auf dem Trägerelement ein Abdeckelement und ein aufweitbarer Dehnkörper angeordnet ist, und wobei der aufweitbare Dehnkörper im nicht aufgeweiteten Zustand mindestens abschnittsweise in einer oder durch eine erste Aussparung in dem Abdeckelement in der Nebenleitung positioniert oder positionierbar ist und im aufgeweiteten Zustand an der Wandung der Nebenleitung anliegt, so dass das Abdeckelement und der Dehnkörper zusammen eine Schalung ausbilden, und wobei das Abdeckelement eine zweite Aussparung aufweist, durch die mittels eines Transportmittels von einer Aufbewahrungseinrichtung eine viskose, aushärtbare Sanierungsmasse in den Raum zwischen der Schalung und der zu der Schalung benachbarten Wandungen der Haupt- und Nebenleitung einbringbar ist, wobei die Vorrichtung eine Heizeinrichtung umfasst, die in Dehnkörper integriert ist.

Unter einem Trägerelement soll insbesondere ein Element verstanden werden, dass auf Rädern oder Ketten verfahrbar ist und über einen integrierten Antrieb verfügt. Alternativ zu einem integrierten Antrieb kann das Trägerelement auch mittels Seilen, Kabeln und dergleichen in der Leitung verfahren werden.

Unter einem Abdeckelement soll ein Element verstanden werden, welches die Innenwandung der Hauptleitung derart abdecken kann, dass zwischen dem Abdeckelement und dem dahinterliegenden Raum ein definierter Hohlraum gebildet ist, der dicht gegenüber der Sanierungsmasse ist und ein Eindringen derselben in die Hauptleitung verhindert.

Oftmals hat es sich als vorteilhaft erwiesen, dass das Abdeckelement in Form eines Hohlzylinders bereitgestellt wird, dessen Innendurchmesser veränderbar ist. So wird der Hohlzylinder mit verkleinertem Innendurchmesser in einem Transportzustand an die schadhafte Stelle mittels des Trägerelements verfahren und dann dort expandiert, so dass dieser an den Innenwandungen der Hauptleitung fest anliegt.

Unter einem Dehnkörper soll ein größenveränderbares Element verstanden werden, welches meist auf Kunststoff oder Gummi basiert und prinzipiell einem Ballon ähnelt. Des weiteren Umfasst der Dehnkörper insbesondere ein Ventil, um ein expandieren mit Druckluft zu ermöglichen sowie bei einem Öffnen des Ventils ein anschließendes Kontrahieren.

Der Dehnköper wird dabei in einer ersten Aussparung in dem Abdeckelement angeordnet und expandiert in die Nebenleitung. Gemeinsam bilden das Abdeckelement und der Dehnkörper eine Schalung aus, die, zumindest ungefähr, dem Innendurchmesser der Leitungen entspricht.

Über eine zweite Aussparung in dem Abdeckelement kann nachfolgend die Sanierungsmasse in den durch die Schalung verschlossenen Hohlraum gepresst werden. Nach dem Aushärten der Sanierungsmasse wird die Schalung entfernt, in dem der Dehnkörper kontrahiert und aus der ersten Aussparung des Abdeckelements entfernt wird. Anschließend wird das Abdeckelement selbst kontrahiert, um aus der Hauptleitung entnommen werden zu können.

Durch eine erfindungsgemäße Heizeinrichtung kann dabei die Aushärtedauer der Sanierungsmasse deutlich reduziert werden.

Der Erfindung liegt dabei die überraschende Erkenntnis zugrunde, dass die Nachteile des Stands der Technik dadurch überwunden werden können, dass eine Sanierungsmasse mit ausreichend hoher Topfzeit und somit langer Aushärtedauer verwendet werden kann, und gleichzeit mittels der bereitgestellten Heizleistung ein schnelles Aushärten sichergestellt ist.

Da sich die Sanierungsmasse um den Dehnkörper herum befindet, kann diese am besten durch eine Aufheizen des Dehnkörpers selbst erreicht werden. Im Unterschied zu Heizungen in der Schalung und/oder den Schläuchen wir somit nicht nur "oberflächlich" am Rand der Leitung, sondern auch in die "Tiefe" der Zuläufe hinein geheizt und somit die Aushärtung beschleunigt.

Die Erfindung sieht vor, dass die Heizeinrichtung in Form einer Infrarot-Heizvorrichtung und/oder einer Mikrowellenerzeugungseinrichtung ausgebildet ist.

Die bevorzugten Heizeinrichtungen haben sich dabei als besonders vorteilhaft für ein Aufheizen der Sanierungsmasse erwiesen.

Auch kann es erfindungsgemäß bevorzugt sein, dass die Aufbewahrungseinrichtung auf dem Trägerelement angeordnet ist.

Wie bereits ausgeführt ist es im Stand der Technik bekannt, dass die Aufbewahrungseinrichtung für die Sanierungsmasse außerhalb des Leitungssystems angeordnet ist. Die diesbezüglichen Nachteile wurden beschrieben. Es hat sich jedoch gezeigt, dass eine direkte Integration der Aufbewahrungsvorrichtung auf das Trägerelement eine besonders kompakte Bauform ermöglicht und insbesondere den Verzicht auf einen zweiten Wagen bzw. Roboter erlaubt.

Dabei kann es vorgesehen sein, dass die Sanierungsmasse aus der Aufbewahrungseinrichtung durch eine Druckbeaufschlagung im Inneren der Aufbewahrungseinrichtung und/oder durch eine Pumpeinrichtung über das Transportmittel in den Raum hinter der Schalung einbringbar ist.

Die Sanierungsmasse muss mit einem jeweils individuellen Minimaldruck in den durch die Schalung definierten Hohlraum eingepresst werden. Des weiteren darf der Druck jedoch nicht so hoch werden, dass die Schalung ihrer abdichtenden Funktion nicht mehr nachkommen kann. Um einen solchen definierten Druck einstellen zu können, haben sich Pumpeinrichtungen, wie z.B. peristaltische Pumpen oder Kolbenpumpen als besonders geeignet erwiesen. Alternativ kann es jedoch auch möglich sein, mittels einer Druckbeaufschlagung innerhalb der Aufbewahrungseinrichtung ein Fluss der Sanierungsmasse in den besagten Hohlraum zu ermöglichen.

Gemäß einer Ausführungsform der vorliegenden Erfindung kann es vorteilhaft sein, dass das Abdeckelement in einem Transportzustand einen geringeren Innendurchmesser aufweist als in einem Betriebszustand, und insbesondere in Form einer Schalungs-Manschette aufgebildet ist.

Die Ausbildung des Abdeckelement mit unterschiedlichen Innendurchmessern ist vorteilhaft und aus dem Stand der Technik bekannt. Insbesondere eine Ausbildung des Abdeckelements in Form einer Schalungsmanschette hat den Vorteil, dass sich das zylinderförmige Abdeckelement sehr gut in der Leitung transportieren lässt und im Betriebstzustand sehr sicher fixiert ist, da es sich innerhalb der Hauptleitung selbstständig ausrichtet und durch den Anpressdruck in der gewünschten Position arretieren lässt, ohne dass weitere Hilfsmittel zum Einsatz kommen müssen.

Des weiteren hat es sich gemäß einer Ausführungsform als vorteilhaft erwiesen, dass ein Drucklufterzeugungselement, insbesondere in Form eines Kompressor und/oder eines Druckluftbehälters, umfasst ist, um den Dehnkörper mittels Druckluft zu expandieren.

Dabei kann insbesondere vorgesehen sein, dass der Dehnkörper ein Ventil umfasst, das im Bereich der ersten Aussparung und/oder im Inneren des Abdeckelements angeordnet ist, wobei ein mindestens in einer Raumachse beweglich gelegarter Ausleger zum Führen einer Transportleitung für die Druckluft von dem Trägerelement umfasst ist, wobei die Transportleitung an der dem Drucklufterzeugungselement gegenüberliegenden Seite ein Verbindungselement umfasst, welches in Wirkverbindung mit dem Ventil des Dehnkörpers bringbar ist oder steht, um mittels des Drucklufterzeugungselements den Dehnkörper mit Druckluft zu beaufschlagen und zu expandieren.

Dabei kann es des weiteren bevorzugt sein, dass das Verbindungselement ausgelegt und eingerichtet ist, um das Ventil des Dehnkörpers für ein Kontrahieren des Dehnkörpers zu betätigen.

Zum Expandieren und Kontrahieren des Dehnkörpers wird bevorzugt auf ein in den Dehnkörper integriertes Ventil zurückgegriffen. Das Ventil selbst ist dabei mittels des Verbindungselements entweder mit Druck beaufschlagbar oder Überdruck im Dehnkörper kann durch in Wirkverbindung bringen des Verbindungselements mit dem Ventil aus dem Dehnkörper abgelassen werden.

Um den Dehnkörper zu Expandieren wird erfindungsgemäß bevorzugt auf Druckluft zurückgegriffen. Die Druckluft wird dabei entweder vor Ort erzeugt oder in einem Druckluftbehälter mitgeführt. Um das Verbindungselement mit dem Ventil des Dehnkörpers zu verbinden hat es sich zudem als vorteihaft erwiesen, dass auf einen in mindestens einer Raumachse beweglichen Ausleger zurückgegriffen wird, an dessem losen Ende sich das Verbindungselement befindet. Dabei ist beoprzugt das Verbindungselement mit der Transportleitung für Druckluft verbunden, die wiederum mit dem Drucklufterzeugungselement verbunden ist.

Es kann dabei vorteilhaft sein, dass der Ausleger mittels mindestens eines Aktuators, insbesondere eines Elektromotors, in der mindestens einen Raumachse, insbesondere in zwei, bevorzugt in drei Raumachsen bewegbar ist.

Eine Bewegung des Auslegers mittels eines Aktuators, beispielsweise eines Elektromotors oder eines hydraulischen oder pneumatischen Zylinders ist besonders vorteilhaft, da der Ausleger somit in Form eines Roboterarms bereitgestellt ist, der von einem Benutzer ferngesteuert werden kann.

Hierbei kann es besonders bevorzugt sein, dass eine Kamera umfasst ist, die auf dem Trägerelement angeordnet ist, wobei die Kamera benachbart zu dem Ausleger angeordnet ist.

Gemäß dem Stand der Technik sind Kameras an einem Ausleger der sich außerhalb des eigenlichten Trägerelements erstreckt angeordnet. Es hat sich jedoch gezeigt, dass aufgrund der Sichtverhältnisse, der Verzerrung durch die außenliegende Perspektive und die Lichtverhältnisse insbesondere das relativ kleine Ventil des Dehnkörpers sowie ein Verschlusselement für die zweite Aussparung nur sehr komplex mit dem Ausleger durch einen Benutzer anfahren lassen. Eine Anordnung einer Kamera, die im Sinne der vorliegenden Erfindung auch ein System von Kameras bzw. Bildaufnahmeeinrichtungen umfassen soll, benachbart zu dem Ausleger überwindet diese Nachteile. Des weiteren kann eine erfindungsgemäße Kamera mit einer Lichtquelle in Wirkverbindung gebracht werden oder stehen, um eine verbesserte Anzeige der zu manipulierenden Objekte durch den Benutzer zu ermöglichen.

Gemäß einer Ausführungsform der vorliegendne Erfindung ist die viskose, aushärtbare Sanierungsmasse ein Expoxydharz ist.

Zweikomponentenharze haben sich als besonders vorteilhafte Dichtmassen erwiesen.

Auch kann es gemäß einer Ausführungsform der vorliegenden Erfindung vorgesehen sein, dass die zweite Aussparung mittels eines Verschlusselements verschlossen ist, wobei insbesondere das Verschlusselement mittels des Trägerelements und/oder eines weiteren Trägerelements öffnenbar und schließbar ist, wobei das weitere Trägerelement in mindestens einer, insbesondere zwei, vorzugsweise drei Raumachsen beweglich gelagert ist.

Ein solches Verschlusselement ist vorteilhaft, da somit verhindert wird, dass die noch nicht ausgehärtete Dichtmasse durch die zwar kleine, aber vorhanden zweite Aussparung ausdringt.

Schließlich kann vorgesehen sein, dass das Transportmittel mit dem Trägerelement oder dem weiteren Trägerelement verbunden ist, so dass dem Aufbewahrungsbehälter gegenüberliegende Ende des Transportmittels an oder zumindest teilweise in der zweiten Aussparung anordnenbar oder angeorndet ist, um die Sanierungsmasse in den Raum zwischen der Schalung und der zu der Schalung benachbarten Wandungen der Haupt- und Nebenleitung einzubringen.

Auch liefert die Erfindung ein Verfahren zum Sanieren von schadhaften Leitungswandungen im Bereich des Anschlusses einer Nebenleitung an eine Hauptleitung, umfassend die folgenden Schritte, insbesondere in dieser Reihenfolge:
a) Bereitstellen einer Vorrichtung nach einem der Ansprüche 1 bis 12;
b) Bewegen des Trägerelements zu dem zu sanierenden Bereich;
c) Expandieren des Abdeckelements bis zum Anliegen an die Innenwand der Hauptleitung;
d) Positionieren des Dehnkörpers durch die erste Aussparung des Abdeckelements;
e) Expandieren des Dehnkörpers;
f) Positionieren des Transportmittels an der zweiten Aussparung des Abdeckelements;
g) Aufheizen des Abdeckelements und/oder des Transportmittels vor, während und/oder nach dem Transport der Sanierungsmasse in den Raum zwischen der Schalung und der zu der Schalung benachbarten Wandungen der Haupt- und Nebenleitung.

Schließlich liefert die Erfindung eine Verwendung einer erfindungsgemäßen Vorrichtung für eine Sanierung von schadhaften Leitungswandungen im Bereich des Anschlusses einer Nebenleitung an eine Hauptleitung.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.
Figur 1: eine schematische Ansicht eines Ausschnitts einer erfindungsgemäßen Vorrichtung sowie eine erfindungsgemäßes Schalungssystem in einem Leitungssystem im Transportzustand im Schnitt;
Figur 2: eine schematische Ansicht eines Ausschnitts einer erfindungsgemäßen Vorrichtung sowie eine erfindungsgemäßes Schalungssystem in einem Leitungssystem im Betriebszustand im Schnitt; und

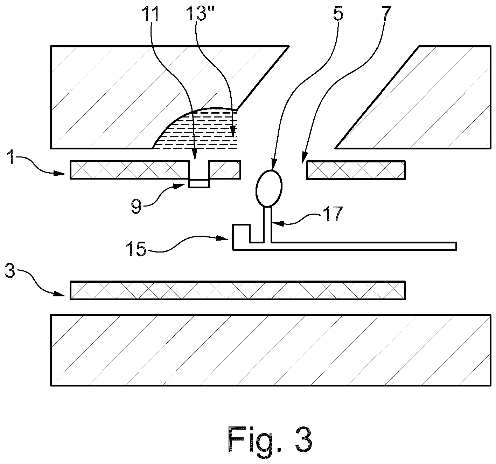

Figur 3: eine schematische Ansicht eines Ausschnitts einer erfindungsgemäßen Vorrichtung sowie eine erfindungsgemäßes Schalungssystem in einem Leitungssystem nach einer Sanierung im Schnitt.

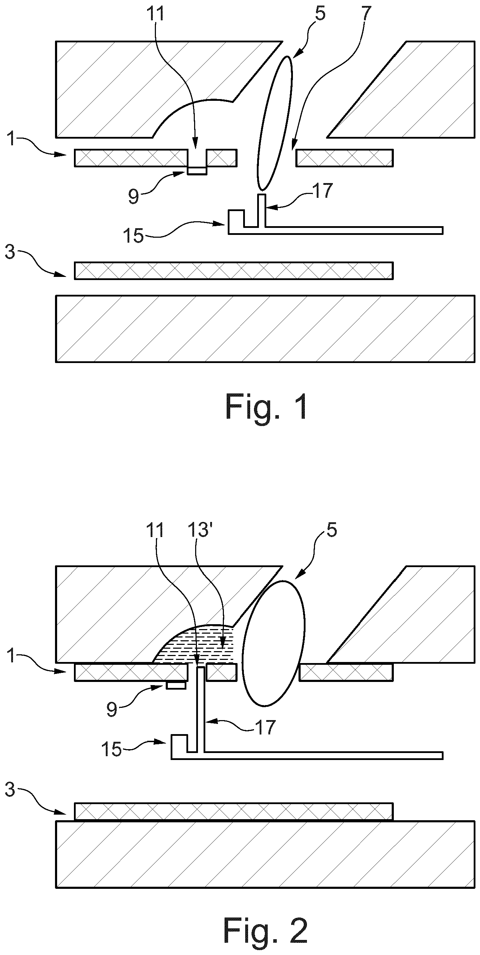

In den Figuren ist eine erfindungsgemäße Vorrichtung 1 ausschließlich teilweise dargestellt. Nicht gezeigt ist beispielsweise ein Fahrwerk und ein Aufbewahrungsbehälter für die Sanierungsmasse. In Figur 1 ist dabei ein Transportzustand einer erfindungsgemäßen Vorrichtung 1 schematisch dargestellt. Die Vorrichtung 1 umfasst ein Abdeckelement 3 sowie einen Dehnkörper 5. Das Abdeckelement 3 ist dabei in Form einer Schalungs-Manschette ausgebildet und der Dehnkörper 5 in Form einer Blase. Der Dehnkörper 5 ist dabei teilweise bereits in einer ersten Aussparung 7 angeordnet. Ein Verschlusselement 9 verschließt eine zweite Aussparung 11, durch die die Sanierungsmasse in den durch den Dehnkörper 5 und das Abdeckelement 3 verschlossenen Hohlraum eingebracht werden kann, um die schadhafte Stelle im Leitungssystem zu sanieren. Eine Kamera 15 und ein Ausleger 17 sind dabei an einem Tragarm der ausschließlich teilweise gezeigten ersten Vorrichtung 1 angeordnet.

Wie in Figur 1 ersichtlich, ist das Abdeckelement 3 in einem Abstand zu der Innenwandung der Hauptleitung angeordnet und der Dehnkörper 5 befindet sich bereits in der ersten Aussparung 7. Somit wird ein einfacher Transport der beiden Schalungselemente zu dem zu sanierenden Abschnitt des Leitungssystems ermöglicht.

In Figur 2 ist der Betriebszustand der erfindungsgemäßen Vorrichtung 1 dargestellt. Dabei ist das Abdeckelement 3 expandiert, so dass es fest an der Innenwandung der Hauptleitung anliegt. Gleichsam ist der expandierte Dehnkörper 5 in der Nebenleitung eng an der Innenwandung der Nebenleitung anliegend. Der somit abgeschlossene Raum 13' zwischen der Schalung und der zu der Schalung benachbarten Wandungen der Haupt- und Nebenleitung wird durch die, durch Öffnen des Verschlusselements 9 freigelegte, zweite Aussparung 11 mittels des Auslegers 17 mit der Sanierungsmasse befüllt. Anschließend wird das Verschlusselement 9 geschlossen und die Sanierungsmasse kann aushärten.

Zur Beschleunigung der Aushärtung kommt dabei erfindungsgemäß eine nicht gezeigte Heizvorrichtung zum Einsatz kommen. Diese ist erfindungsgemäß direkt in dem Dehnkörper 5 integriert. Zusätzlich können Heizeinrichtungen auch in den Schalung und/oder in das Transportmittel für die Sanierungsmasse integriert sein.

Nach erfolgter Aushärtung wird der Dehnkörper 5 kontrahiert und auch der Außendurchmesser des Abdeckelements 3 reduziert, so dass die aus diesen beiden Elementen gebildete Schalung entfernt werden kann. Die Sanierungsmasse 13^{' '} zu diesem Zeitpunkt ausgehärtet und die Sanierung der Leitung somit erfolgreich abgeschlossen.

## Patentansprüche

1. Vorrichtung (1) zum Sanieren von schadhaften Leitungswandungen im Bereich des Anschlusses einer Nebenleitung an eine Hauptleitung, umfassend ein fahrbares Trägerelement, wobei auf dem Trägerelement ein Abdeckelement (3) und ein aufweitbarer Dehnkörper (5) angeordnet ist, und wobei der aufweitbare Dehnkörper (5) im nicht aufgeweiteten Zustand mindestens abschnittsweise in einer oder durch eine erste Aussparung (7) in dem Abdeckelement (3) in der Nebenleitung positioniert oder positionierbar ist und im aufgeweiteten Zustand an der Wandung der Nebenleitung anliegt, so dass das Abdeckelement (3) und der Dehnkörper (5) zusammen eine Schalung ausbilden, und wobei das Abdeckelement (3) eine zweite Aussparung (11) aufweist, durch die mittels eines Transportmittels von einer Aufbewahrungseinrichtung eine viskose, aushärtbare Sanierungsmasse (13") in den Raum (13 ^{'} ) zwischen der Schalung und der zu der Schalung benachbarten Wandungen der Haupt- und Nebenleitung einbringbar ist, wobei
die Vorrichtung (1) eine Heizeinrichtung umfasst, die in Dehnkörper (5) integriert ist
**dadurch gekennzeichnet, dass** die Heizvorrichtung in Form einer Infrarot-Heizvorrichtung und/oder einer Mikrowellenerzeugungseinrichtung ausgebildet ist.

2. Vorrichtung (1) nach Anspruch 1 oder Anspruch 2, **dadurch gekennzeichnet, dass**
die Aufbewahrungseinrichtung auf dem Trägerement angeordnet ist.

3. Vorrichtung (1) nach einem der vorangehenden Ansprüche, **dadurch gekennzeichnet, dass**
die Sanierungsmasse (13") aus der Aufbewahrungseinrichtung durch eine Druckbeaufschlagung im Inneren der Aufbewahrungseinrichtung und/oder durch eine Pumpeinrichtung über das Transportmittel in den den Raum (13 ^{'} ) zwischen der Schalung und der zu der Schalung benachbarten Wandungen der Haupt- und Nebenleitung einbringbar ist.

4. Vorrichtung (1) nach einem der vorangehenden Ansprüche, **dadurch gekennzeichnet, dass**
das Abdeckelement (3) in einem Transportzustand einen geringeren Innendurchmesser aufweist als in einem Betriebszustand, und insbesondere in Form einer Schalungs-Manschette aufgebildet ist.

5. Vorrichtung (1) nach einem der vorangehenden Ansprüche, **dadurch gekennzeichnet, dass**
ein Drucklufterzeugungselement, insbesondere in Form eines Kompressor und/oder eines Druckluftbehälters, umfasst ist, um den Dehnkörper (5) mittels Druckluft zu expandieren.

6. Vorrichtung (1) nach Anspruch 5,
**dadurch gekennzeichnet, dass**
der Dehnkörper (5) ein Ventil umfasst, das im Bereich der ersten Aussparung (7) und/oder im Inneren des Abdeckelements (3) angeordnet ist, wobei ein mindestens in einer Raumachse beweglich gelegarter Ausleger (17) zum Führen einer Transportleitung für die Druckluft von dem Trägerelement umfasst ist, wobei die Transportleitung an der dem Drucklufterzeugungselement gegenüberliegenden Seite ein Verbindungselement umfasst, welches in Wirkverbindung mit dem Ventil des Dehnkörpers (5) bringbar ist oder steht, um mittels des Drucklufterzeugungselements den Dehnkörper (5) mit Druckluft zu beaufschlagen und zu expandieren.

7. Vorrichtung (1) nach Anspruch 6,
**dadurch gekennzeichnet, dass**
das Verbindungselement ausgelegt und eingerichtet ist, um das Ventil des Dehnkörpers (5) für ein Kontrahieren des Dehnkörpers (5) zu betätigen.

8. Vorrichtung (1) nach Anspruch 6 oder 7,
**dadurch gekennzeichnet, dass**
der Ausleger (17) mittels mindestens eines Aktuators, insbesondere eines Elektromotors, in der mindestens einen Raumachse, insbesondere in zwei, bevorzugt in drei Raumachsen bewegbar ist.

9. Vorrichtung (1) nach einem der Ansprüche 6 bis 8,
**dadurch gekennzeichnet,**
**dass**
eine Kamera (15) umfasst ist, die auf dem Trägerelement angeordnet ist, wobei die Kamera (15) benachbart zu dem Ausleger (17) angeordnet ist.

10. Vorrichtung (1) nach einem der vorangehenden Ansprüche, **dadurch gekennzeichnet, dass**
die viskose, aushärtbare Sanierungsmasse (13") ein Expoxydharz ist.

11. Vorrichtung (1) nach einem der vorangehenden Ansprüche, **dadurch gekennzeichnet, dass**
die zweite Aussparung (11) mittels eines Verschlusselements (9) verschlossen ist, wobei insbesondere das Verschlusselement (9) mittels des Trägerelements und/oder eines weiteren Trägerelements öffnenbar und schließbar ist, wobei das weitere Trägerelement in mindestens einer, insbesondere zwei, vorzugsweise drei Raumachsen beweglich gelagert ist.

12. Vorrichtung (1) nach Anspruch 11,
**dadurch gekennzeichnet, dass**
das Transportmittel mit dem Trägerelement oder dem weiteren Trägerelement verbunden ist, so dass dem Aufbewahrungsbehälter gegenüberliegende Ende des Transportmittels an oder zumindest teilweise in der zweiten Aussparung (11) anordnenbar oder angeorndet ist, um die Sanierungsmasse (13") in den Raum (13') zwischen der Schalung und der zu der Schalung benachbarten Wandungen der Haupt- und Nebenleitung einzubringen.

13. Verfahren zum Sanieren von schadhaften Leitungswandungen im Bereich des Anschlusses einer Nebenleitung an eine Hauptleitung, umfassend die folgenden Schritte, insbesondere in dieser Reihenfolge:
a) Bereitstellen einer Vorrichtung (1) nach einem der vorangehnden Ansprüche;
b) Bewegen des Trägerelements zu dem zu sanierenden Bereich;
c) Expandieren des Abdeckelements (3) bis zum Anliegen an die Innenwand der Hauptleitung;
d) Positionieren des Dehnkörpers (5) durch die erste Aussparung (7) des Abdeckelements (3);
e) Expandieren des Dehnkörpers (5);
f) Positionieren des Transportmittels an der zweiten Aussparung (11) des Abdeckelements (3);
g) Aufheizen des Dehnkörpers (5) und/oder des Abdeckelements (3) und/oder des Transportmittels vor, während und/oder nach dem Transport der Sanierungsmasse (13") in den Raum (13') zwischen der Schalung und der zu der Schalung benachbarten Wandungen der Haupt- und Nebenleitung.

14. Verwendung einer Vorrichtung (1) nach einem der Ansprüche 1 bis 12 für eine Sanierung von schadhaften Leitungswandungen im Bereich des Anschlusses einer Nebenleitung an eine Hauptleitung.

## Claims

1. Device (1) for rehabilitating defective pipe walls in the area of the connection of a lateral line to a main line, comprising a drivable carrier element, on which a covering element (3) and an expandable expansion body (5) are arranged, and wherein the expandable expansion body (5), in the non-expanded state, is positioned or can be positioned at least in sections in or through a first recess (7) in the covering element (3) in the lateral line, and in the expanded state lies against the wall of the lateral line, so that the covering element (3) and the expansion body (5) together form a formwork, and wherein the covering element (3) has a second recess (11), through which, by means of a transport means from a storage device, a viscous, curable rehabilitation material (13‴) can be introduced into the space (13') between the formwork and the walls of the main and lateral line adjacent to the formwork, wherein the device (1) comprises a heating device which is integrated into the expansion body (5)
**characterized in that**
the heating device is designed in the form of an infrared heating device and/or a microwave generating device.

2. Device (1) according to Claim 1 or Claim 2, **characterized in that**
the storage device is arranged on the carrier element.

3. Device (1) according to one of the preceding claims, **characterized in that**
the rehabilitation material (13") can be introduced from the storage device into the space (13') between the formwork and the walls of the main and lateral line adjacent to the formwork by means of pressure application in the interior of the storage device and/or by means of a pumping device via the transport means.

4. Device (1) according to one of the preceding claims, **characterized in that**
the covering element (3) has a smaller internal diameter in a transport state than in an operating state and is formed in particular as a formwork sleeve.

5. Device (1) according to one of the preceding claims, **characterized in that**
a compressed air generating element, in particular in the form of a compressor and/or a compressed air tank, is included to expand the expansion body (5) by means of compressed air.

6. Device (1) according to Claim 5, **characterized in that**
the expansion body (5) comprises a valve which is arranged in the area of the first recess (7) and/or in the interior of the covering element (3), wherein at least one boom (17) mounted so as to be movable in at least one spatial axis is included to guide a transport line for the compressed air from the carrier element, wherein the transport line on the side opposite the compressed air generating element comprises a connecting element which can be brought or is brought into operative connection with the valve of the expansion body (5) in order to apply compressed air to the expansion body (5) by means of the compressed air generating element and expand it.

7. Device (1) according to Claim 6, **characterized in that** the connecting element is designed and arranged to actuate the valve of the expansion body (5) for a contraction of the expansion body (5).

8. Device (1) according to Claim 6 or 7, **characterized in that**
the boom (17) is movable by means of at least one actuator, in particular an electric motor, in the at least one spatial axis, in particular in two, preferably in three spatial axes.

9. Device (1) according to one of Claims 6 to 8, **characterized in that**
a camera (15) is included, which is arranged on the carrier element, wherein the camera (15) is arranged adjacent to the boom (17).

10. Device (1) according to one of the preceding claims,
**characterized in that** the viscous, curable rehabilitation material (13"') is an epoxy resin.

11. Device (1) according to one of the preceding claims, **characterized in that**
the second recess (11) is closed by means of a closure element (9), wherein in particular the closure element (9) can be opened and closed by means of the carrier element and/or a further carrier element, wherein the further carrier element is mounted so as to be movable in at least one, in particular two, preferably three spatial axes.

12. Device (1) according to Claim 11, **characterized in that**
the transport means is connected to the carrier element or the further carrier element, so that the end of the transport means opposite the storage container can be or is arranged on or at least partially in the second recess (11), in order to introduce the rehabilitation material (13‴) into the space (13') between the formwork and the walls of the main and lateral line adjacent to the formwork.

13. Method for rehabilitating defective pipe walls in the area of the connection of a lateral line to a main line, comprising the following steps, in particular in this order:
a) Providing a device (1) according to one of the preceding claims;
b) Moving the carrier element to the area to be rehabilitated;
c) Expanding the covering element (3) until it contacts the inner wall of the main line;
d) Positioning the expansion body (5) through the first recess (7) of the covering element (3);
e) Expanding the expansion body (5);
f) Positioning the transport means at the second recess (11) of the covering element (3);
g) Heating the expansion body (5) and/or the covering element (3) and/or the transport means before, during and/or after the transport of the rehabilitation material (13‴) into the space (13') between the formwork and the walls of the main and lateral line adjacent to the formwork.

14. Use of a device (1) according to one of Claims 1 to 12 for rehabilitating defective pipe walls in the area of the connection of a lateral line to a main line.

## Revendications

1. Dispositif (1) pour la réhabilitation de parois de conduites endommagées dans la zone du raccordement d'une conduite secondaire à une conduite principale, comprenant un élément porteur pouvant être déplacé, sur lequel un élément de recouvrement (3) et un corps de dilatation (5) pouvant être élargi sont disposés, et dans lequel le corps de dilatation (5), à l'état non élargi, est positionné ou peut être positionné au moins par sections dans ou à travers une première découpe (7) dans l'élément de recouvrement (3) dans la conduite secondaire, et à l'état élargi vient en appui contre la paroi de la conduite secondaire, de sorte que l'élément de recouvrement (3) et le corps de dilatation (5) forment ensemble un coffrage, et dans lequel l'élément de recouvrement (3) comporte une deuxième découpe (11), à travers laquelle, au moyen d'un moyen de transport depuis un dispositif de stockage, une masse de réhabilitation visqueuse et durcissable (13‴) peut être introduite dans l'espace (13') entre le coffrage et les parois de la conduite principale et de la conduite secondaire adjacentes audit coffrage, le dispositif (1) comprenant un dispositif de chauffage qui est intégré dans le corps de dilatation (5),**caractérisé en ce que** le dispositif de chauffage est conçu sous la forme d'un dispositif de chauffage infrarouge et/ou d'un générateur de micro-ondes.

2. Dispositif (1) selon la revendication 1 ou la revendication 2, **caractérisé en ce que** le dispositif de stockage est disposé sur l'élément porteur.

3. Dispositif (1) selon l'une des revendications précédentes, **caractérisé en ce que** la masse de réhabilitation (13") peut être introduite depuis le dispositif de stockage dans l'espace (13') entre le coffrage et les parois de la conduite principale et de la conduite secondaire adjacentes au coffrage, au moyen d'une application de pression à l'intérieur dudit dispositif de stockage et/ou au moyen d'un dispositif de pompage via le moyen de transport.

4. Dispositif (1) selon l'une des revendications précédentes, **caractérisé en ce que** l'élément de recouvrement (3) présente un diamètre interne plus petit à l'état de transport qu'à l'état de fonctionnement, et est formé en particulier sous la forme d'une manchette de coffrage.

5. Dispositif (1) selon l'une des revendications précédentes, **caractérisé en ce qu'**un élément de production d'air comprimé, en particulier sous la forme d'un compresseur et/ou d'un réservoir d'air comprimé, est inclus, afin de dilater le corps de dilatation (5) au moyen d'air comprimé.

6. Dispositif (1) selon la revendication 5, **caractérisé en ce que** le corps de dilatation (5) comporte une valve, laquelle est disposée dans la zone de la première découpe (7) et/ou à l'intérieur de l'élément de recouvrement (3), un bras (17) pouvant être monté de manière à être mobile au moins dans un axe spatial étant inclus pour guider une conduite de transport de l'air comprimé depuis l'élément porteur, ladite conduite de transport comprenant, sur le côté opposé à l'élément de production d'air comprimé, un élément de raccordement pouvant être mis ou étant mis en liaison fonctionnelle avec la valve du corps de dilatation (5) afin de soumettre le corps de dilatation (5) à l'air comprimé au moyen de l'élément de production d'air comprimé et de l'élargir.

7. Dispositif (1) selon la revendication 6, **caractérisé en ce que** l'élément de raccordement est conçu et aménagé pour actionner la valve du corps de dilatation (5) en vue d'une contraction dudit corps de dilatation (5).

8. Dispositif (1) selon la revendication 6 ou 7, **caractérisé en ce que** le bras (17) est mobile au moyen d'au moins un actionneur, en particulier un moteur électrique, dans ledit axe spatial, en particulier dans deux, de préférence dans trois axes spatiaux.

9. Dispositif (1) selon l'une des revendications 6 à 8, **caractérisé en ce qu'**une caméra (15) est incluse, ladite caméra (15) étant disposée sur l'élément porteur, et placée à proximité dudit bras (17).

10. Dispositif (1) selon l'une des revendications précédentes, **caractérisé en ce que** la masse de réhabilitation visqueuse et durcissable (13"') est une résine époxy.

11. Dispositif (1) selon l'une des revendications précédentes, **caractérisé en ce que** la deuxième découpe (11) est fermée au moyen d'un élément de fermeture (9), lequel élément de fermeture (9) peut en particulier être ouvert et fermé au moyen de l'élément porteur et/ou d'un autre élément porteur, ledit autre élément porteur étant monté de manière à être mobile dans au moins un, en particulier deux, de préférence trois axes spatiaux.

12. Dispositif (1) selon la revendication 11, **caractérisé en ce que** le moyen de transport est relié à l'élément porteur ou audit autre élément porteur, de sorte que l'extrémité dudit moyen de transport opposée au dispositif de stockage puisse être ou soit disposée sur, ou au moins partiellement dans, la deuxième découpe (11), afin d'introduire la masse de réhabilitation (13‴) dans l'espace (13') entre le coffrage et les parois de la conduite principale et de la conduite secondaire adjacentes audit coffrage.

13. Procédé de réhabilitation de parois de conduites endommagées dans la zone du raccordement d'une conduite secondaire à une conduite principale, comprenant les étapes suivantes, en particulier dans cet ordre:
a) Fourniture d'un dispositif (1) selon l'une des revendications précédentes;
b) Déplacement de l'élément porteur vers la zone à réhabiliter;
c) Dilatation de l'élément de recouvrement (3) jusqu'à ce qu'il vienne en appui contre la paroi intérieure de la conduite principale;
d) Positionnement du corps de dilatation (5) à travers la première découpe (7) de l'élément de recouvrement (3);
e) Dilatation du corps de dilatation (5);
f) Positionnement du moyen de transport sur la deuxième découpe (11) de l'élément de recouvrement (3);
g) Chauffage du corps de dilatation (5) et/ou de l'élément de recouvrement (3) et/ou du moyen de transport avant, pendant et/ou après l'introduction de la masse de réhabilitation (13**) dans l'espace (13') entre le coffrage et les parois de la conduite principale et de la conduite secondaire adjacentes audit coffrage.

14. Utilisation d'un dispositif (1) selon l'une des revendications 1 à 12 pour la réhabilitation de parois de conduites endommagées dans la zone du raccordement d'une conduite secondaire à une conduite principale.
